# EUROPEAN PATENT SPECIFICATION

(11) **EP 4 548 069 B1**
(45) Date of publication and mention of the grant of the patent: **12.08.2026**
(21) Application number: 23735701.7
(22) Date of filing: 27.06.2023
(51) Int. Cl.: G01N 15/14, B65G 35/06, G01N 35/00, G06Q 10/04, G06Q 10/08, G01N 35/04, G06Q 10/047, G06Q 10/083

(54) **SAFE POINT PATTERN**
SICHERES PUNKTMUSTER
MOTIF DE POINTS DE SÉCURITÉ

(30) Priority: 28.06.2022 EP 22181627
(43) Date of publication of application: 07.05.2025
(73) Proprietor: Roche Diagnostics GmbH, 68305 Mannheim (DE); F. Hoffmann-La Roche AG, 4070 Basel (CH)
(72) Inventor: OOSTERBROEK, Edwin, 6343 Rotkreuz (CH); SCHNARWILER, Dominik, 6343 Rotkreuz (CH); SILLITOE, Nicolas Seungoon, 6343 Rotkreuz (CH)
(74) Representative: Altmann Stößel Dick Patentanwälte PartG mbB
(86) International application number: PCT/EP2023/067432
(87) International publication number: WO 2024/003030

(56) References cited:
- WO-A1-2012/158541
- WO-A1-2022/063760
- US-A1- 2016 341 750
- US-B2- 11 092 613
- RENUKAMURTHY SANJAY: "University of Windsor Scholarship at UWindsor Improving Spatially Distributed Multiagent Pathfinding Using Cooperative JPS", 5 January 2016 (2016-01-05), XP055982411, Retrieved from the Internet <URL:https://core.ac.uk/download/pdf/72793258.pdf> [retrieved on 20221117]

## Description

### Technical Field

The present invention relates to a method of operating a distribution system and to a distribution system. The method and the system of the present invention, as an example, may be used for controlling movements of carriers transporting sample containers, in particular sample tubes, filled with biological fluids to be analyzed or reagents, and/or cassettes filled with reagents, specimen slides, tissue material, waste, disposables like pipette tips or tube caps, and/or empty tubes for aliquoting, specifically in the field of diagnostic laboratories. The method and the system can also be used for transporting these goods inside diagnostics instruments or other applications requiring controlling the movement of carriers on a transport plane, such as carriers transporting payloads such as goods, wares of a warehouse, products to be manufactured in a manufacturing site or other objects.

### Background art

In the field of diagnostic laboratories, generally, a plurality of samples, for example liquid samples, have to be handled automatically. The automatic handling of samples may comprise automatically transporting sample containers, specifically sample containers comprising the samples to be handled, via carriers in the diagnostic laboratory by means of one or more distribution systems.

For example, EP 3 095 739 A1 describes a method of operating a laboratory sample distribution system. The laboratory sample distribution system comprises: a number of sample container carriers, wherein the sample container carriers are adapted to carry one or more sample containers, wherein the sample containers comprise samples to be analyzed by means of a number of laboratory stations; a transport plane, wherein the transport plane is adapted to support the sample container carriers, wherein the transport plane comprises a number of transfer locations, wherein the transfer locations are assigned to corresponding laboratory stations; and drive means, wherein the drive means are adapted to move the sample container carriers on the transport plane. The method comprises the steps: during an initialization of the laboratory sample distribution system, pre-calculating routes depending on the transfer locations, and after the initialization of the laboratory sample distribution system, controlling the drive means such that the sample container carriers move along the pre-calculated routes.

EP 3 537 159 A1 discloses a method of operating a laboratory sample distribution system. The laboratory sample distribution system comprises: a plurality of sample container carriers, wherein the sample container carriers are adapted to carry a laboratory sample container; a transport plane, wherein the transport plane is adapted to support the sample container carriers; and a plurality of drive elements, wherein the drive elements are adapted to move the sample container carriers on the transport plane. The method comprises the steps: a) planning a movement path for one of the sample container carriers from a start to a goal on the transport plane, wherein the transport plane is logically modeled by a plurality of nodes, wherein the nodes are free for at least one time-window or reserved for at least one-time window, wherein the planning comprises analyzing the reachability out of a free time-window of one of the nodes to free time-windows of at least one next node and at least one at least over-next node, such that a planned movement of the one sample container carrier is nonstop from the one node over the next node to the at least one over-next node, and reserving the planned movement path comprising a sequence of time-windows of nodes; and b) executing by controlling at least one of the drive elements, such that the one sample container carrier moves along the reserved movement path on the transport plane.

US 10,006,927 B2 discloses a method of operating a laboratory automation system. The laboratory automation system comprises a plurality of laboratory stations and a plurality of sample container carriers. The sample container carriers carry one or more sample containers. The sample containers comprise samples to be analyzed by the laboratory stations. The system also comprises a transport plane. The transport plane supports the sample container carriers. The system also comprises a drive. The drive moves the sample container carriers on the transport plane. The method comprises, during an initialization of the laboratory automation system, logically reserving at least one buffer area on the transport plane and, after the initialization of the laboratory automation system, buffering in the at least one buffer area sample container carriers carrying sample containers comprising samples waiting for a result of an analysis. Depending on the result of the analysis, the samples are further processed.

US 2018/0348244 A1 describes a method of operating a laboratory sample distribution system is presented. The system comprises sample container carriers comprising a magnetically active device and configured to carry a sample container, interconnected transport plane modules configured to support carriers, and electromagnetic actuators arranged in rows and columns below each transport plane module and configured to move a carrier on top of the transport plane modules by applying a magnetic force to the carrier. The method comprises assigning transport plane modules to a route category. At least two traffic lanes are formed on the route categorized transport plane module. The carriers are moved within each traffic lane in a transport direction. The transport directions are opposite to each other. The method also comprises assigning another transport plane module to a waypoint category. A change from one transport direction to the opposite transport direction is possible on the waypoint categorized transport plane module.

WO 2022/063760 A1 discloses a method of operating a distribution system. The distribution system comprises a number of carriers, wherein the carriers are adapted to carry one or more goods. A transport plane of the distribution system supports the carriers. A control device controls the drive means. During an initialization of the distribution system, the control device pre-defines a pattern of safe points on the transport plane, wherein on the safe points a carrier can be placed. After the initialization of the distribution system the control device calculates partial routes for the carriers so that the end position of each partial route is either one of the safe points or has a free path to one of the safe points to be reachable in the next partial route.

US 11,092,613 B2 describes a method of operating a laboratory sample distribution system. The laboratory sample distribution system comprises a number of sample container carriers. The sample container carriers are adapted to carry one or more sample containers. The sample containers comprise samples to be analyzed by a number of laboratory stations. The laboratory sample distribution system also comprises a transport plane. The transport plane is adapted to support the sample container carriers. The method comprises allocating an area of the transport plane as a buffer area. The buffer area is adapted to store a variable number of sample container carriers. The method also comprises controlling the buffer area using a puzzle-based control scheme or using an aisle-based control scheme as a function of a storage density of the buffer area.

US 2016/0341750 A1 discloses a method of operating a laboratory automation system. The laboratory automation system comprises a plurality of laboratory stations and a plurality of sample container carriers. The sample container carriers carry one or more sample containers. The sample containers comprise samples to be analyzed by the laboratory stations. The system also comprises a transport plane. The transport plane supports the sample container carriers. The system also comprises a drive. The drive moves the sample container carriers on the transport plane. The method comprises, during an initialization of the laboratory automation system, logically reserving at least one buffer area on the transport plane and, after the initialization of the laboratory automation system, buffering in the at least one buffer area sample container carriers carrying sample containers comprising samples waiting for a result of an analysis. Depending on the result of the analysis, the samples are further processed.

Despite the advantages achieved by known methods and devices, several technical challenges remain. With the known methods and devices, deadlock problems may still occur and system performance may still not be optimal. Specifically, deadlock problems may arise if carriers block each other on the transport plane, in particular such that the blocked carriers are not able to move.

### Problem to be solved

It is therefore desirable to provide methods and devices which at least partially address above-mentioned technical challenges. Specifically, a method for operating a distribution system, and a distribution system shall be proposed which allow for preventing deadlocking and enhancing the system performance.

### Summary

This problem is addressed by a method of operating a distribution system and a distribution system with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, notwithstanding the fact that the respective feature or element may be present once or more than once.

Furthermore, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a method of operating a distribution system is disclosed. The distribution system comprises
- a number of carriers configured for carrying one or more objects,
- a transport plane configured for supporting the carriers, wherein the transport plane comprises a plurality of transport modules, wherein a grid of logical positions is defined on the transport plane,
- a drive system configured for moving the carriers on the transport plane between the logical positions,
- a control system configured for controlling the drive system, wherein the control system comprises a routing system configured for calculating routes for the carriers,

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components forming a whole. Specifically, the components may interact with each other in order to fulfill at least one common function. The at least two components may be handled independently or may be coupled or connectable.

The term "distribution system" as used herein is a broad term and is to be given its ordinary and customary meaning to a person of ordinary skill in the art and is not to be limited to a special or customized meaning. The term specifically may refer, without limitation, to a system configured for distributing carriers from an initial position to a target destination. The distribution system may be an element of a laboratory automation system allowing to distribute carriers to a target destination within the laboratory automation system. Distribution systems may be used in laboratory automation systems comprising a number of laboratory stations, for example pre-analytical, analytical and/or post-analytical stations. Distribution systems are generally known by the skilled person e.g. from EP 3 095 739 A1 or WO2012/158541.

The term "operating" as used herein is a broad term and is to be given its ordinary and customary meaning to a person of ordinary skill in the art and is not to be limited to a special or customized meaning. The term specifically may refer, without limitation, to a process of controlling, specifically automatically controlling and/or by manual interaction, the distribution system and/or components of the distribution system. As an example, operating the distribution system may comprise controlling the distribution system, such as the drive system of the distribution system via the control system, to distribute carriers from the initial position to the target destination. For example, operating the distribution system may comprise controlling the distribution system to perform the distribution of carriers and, further, monitoring the distribution of carriers and, if necessary, adapting or changing the distribution of carriers.

The term "carrier" as used herein is a broad term and is to be given its ordinary and customary meaning to a person of ordinary skill in the art and is not to be limited to a special or customized meaning. The term specifically may refer, without limitation, to a support structure configured for supporting and transporting a payload. The carrier may be provided with appropriate holding means to support, and if required, to secure payload in a needed manner and orientation. The carrier can be self-propelling. Additionally or alternatively, the carriers can be propelled by using actuators, such as electromagnetic coils, arranged under the surface of the transport plane. Exemplary embodiments of the carrier are described e.g. in WO 2011/138448 A1, WO 2013/064665 A1 or WO 2017/144219 A1.

The term "object" as used herein is a broad term and is to be given its ordinary and customary meaning to a person of ordinary skill in the art and is not to be limited to a special or customized meaning. The term specifically may refer, without limitation, to arbitrary payload. The object may be at least one sample container such as laboratory diagnostic containers or vessels.

As outlined above, the distribution system comprises the transport plane. The term "transport plane" as used herein is a broad term and is to be given its ordinary and customary meaning to a person of ordinary skill in the art and is not to be limited to a special or customized meaning. The term specifically may refer, without limitation, to any kind of two dimensional plane, bed, layer, platform or flat base configured for transporting carriers. The transport plane may be configured such that carriers are positionable onto the transport plane, in particular on a surface of the transport plane, such that the carriers are movable in at least two dimensions over the transport plane. For instance, the transport plane may be a sliding surface mounted in a diagnostics laboratory or a floor of a manufacturing site or inside a laboratory, hospital, storage or manufacturing hall. The transport plane may be installed vertically or horizontally including slopes. Also curved transport planes may be possible. The transport plane may not only mean the plane itself but also the actuator elements and electronics in or underneath it. The transport plane may comprise actuators, sensors and/or electronics for moving the carriers.

The transport plane may be configured for providing movement of the carrier by contact. The transport plane may constitute a coordinate system, wherein movements of the carriers may happen in x and y directions on the transport plane. The transport plane may be configured such that a carrier can contact the surface of the transport plane such that friction can be used to brake and control movements of the carrier. The transport plane may be configured for contactless movement of the carrier. The transport plane may be configured such that a carrier can move contactlessly, e.g. by air or magnetic levitation providing a small gap between carrier and the surface. For a third dimension, either the transport plane may be formed correspondingly with corresponding limitations in upward and downward slope, or some kind of levitation mechanism may be installed such as magnetic levitation or air cushion technique with the corresponding limitations in reachable height without losing control. For vertical transportation in the third dimension also an elevator or paternoster mechanism can be installed.

As outlined above, the transport plane comprises a plurality of transport modules. The term "transport module" as used herein is a broad term and is to be given its ordinary and customary meaning to a person of ordinary skill in the art and is not to be limited to a special or customized meaning. The term specifically may refer, without limitation, to separated constructional units and/or sub-unit of the transport plane comprising at least one logical position. The transport modules are separated constructional units and/or subunit of the transport plane comprising at least one logical position. The transport module may comprise a plurality of logical positions. The transport modules may be identically constructed or differ from each other. The transport plane may be a modular transport plane formed by interconnected transport modules. The transport modules may be interconnected such that the carriers may move from each of the transport modules directly or indirectly to each of the other modules. The interconnected transport modules may form a continuous transport plane, which may also be denoted as transport surface. Below each transport module, a number of the electro-magnetic actuators can be stationary arranged in rows and columns. The electromagnetic actuators can be configured to move a carrier on a top surface of the transport modules along a row of the rows or along a column of the columns by applying a magnetic move force to the carrier. Each of the transport modules may be limited by module boundaries. The transport modules may have different shapes and/or sizes. For example, the transport modules may be square modules. At least one of the transport modules may be a non-square transport module. The present invention provides a method for adapting the safe point pattern to geometries to a mix of transport module dimensions, including rectangular and non-rectangular transport modules.

The term "logical position" as used herein is a broad term and is to be given its ordinary and customary meaning to a person of ordinary skill in the art and is not to be limited to a special or customized meaning. The term specifically may refer, without limitation, to an arbitrary location of the transport plane being adapted to support a carrier. The logical position may be a location of the transport plane at which the carrier can, but not necessarily has to stop. The carrier may stand still on the logical position, move over several logical positions and/or stop at a final logical position of a move. A presentation of the transport plane may be a graph, also referred to as "grid", with logical positions or logical positions and allowed connections between them. The transport plane may be mathematically mapped to a graph of logical positions or a graph of logical positions and allowed connections between them. Routing, for example finding of routes, of the carriers on the logical positions may be performed using the graph. The drive system is configured for moving the carriers on the transport plane between the logical positions. The moving between the logical positions may comprise following the logical positions.

Logical positions may be defined on the transport plane by hardware design and/or by software. As an example, logical positions may be defined by hardware design and by software, wherein the software may decide that not all logical hardware positions can be used. For example, the software may reduce a number of logical positions defined by the hardware design. The logical position may be an imaginary position in the routing algorithm and/or a position on the real transport plane. For example, a logical position may be defined on the transport plane as a position at which the carrier can stop, start and/or change direction. In systems such as described in EP2 566 787 or WO 2013/098202, the drive system may define these logical positions by its hardware limitations. Logical positions may be defined above an electro-magnetic actuator. At these positions, it may be possible to stop the carrier and to change its direction with the next move. The logical positions may be defined as wanted or required to form a useful set of crossing points, junctions, start and stop positions. The logical position may be a discrete position where the carrier can stop. In particular, the logical position may be defined by at least one physical entity of the drive system, such as an electromagnetic coil or a crossing of possible ways such as rails.

Each of the logical positions may be configured for being occupied by only one carrier. Thus, two carriers cannot share one logical position at the same time. The distribution system may be configured for moving a plurality of carriers on the transport plane via respective calculated partial routes, wherein the respective route may lead from a first logical position to a second logical position, i.e. the end position of the respective partial route.

A logical position can be any position reachable by the carriers or any position where the carriers can change direction, be parked or can be identified by an identification or registration system.

Identification and registration systems can be a camera system or optical sensors and scanners, like laser scanners, identifying any optical signature on the carriers or object such as its size, its type, or a barcode or QR code, Hall sensors, capacitive sensors, and the like. Alternatively or in addition, a RFID-reader system reading a unique RFID of the carrier or object on the carrier or sensors inside the transport plane can be used to identify positions and to localize the carriers. The identifying of the positions may comprise using sensors to identify at which location a carrier is moving or standing still. For example, the sensors inside the transport plane may be configured for identifying the presence of carriers at or between positions. This may be used to control the driving system, e.g. to know if a carrier needs to be dragged longer by magnetic forces and/or needs to be stopped etc. A further option can be high precision GPS, in particular enhanced with one or more of local beacons, Bluetooth, Wi-Fi, GSM signals as well as acceleration sensors.

As further outlined above, the distribution system comprises the drive system. The term "drive system" as used herein is a broad term and is to be given its ordinary and customary meaning to a person of ordinary skill in the art and is not to be limited to a special or customized meaning. The term specifically may refer, without limitation, to a system configured for moving the carriers on the transport plane. The drive system can be implemented in the carriers itself e.g. wheels connected to an electric motor with connected battery and electronics. Another possibility are linear motors. Also possible are passive carriers. For instance, a magnetic device may be fixed in the carrier and a magnetic force provided by magnetically active and drivable elements, such as electro-magnetic actuators, enforce the carriers to move by generated electro-magnetic fields. The coils can be installed under, above, besides or in the transport plane. For instance, an arrangement of magnetic coils underneath the transport plane is described e.g. in EP 2 566 787 or WO 2013/098202.

The term "control system" as used herein is a broad term and is to be given its ordinary and customary meaning to a person of ordinary skill in the art and is not to be limited to a special or customized meaning. The term specifically may refer, without limitation, to an arbitrary system configured for performing the named operations, preferably by using at least one data processing device and, more preferably, by using at least one processor and/or at least one application-specific integrated circuit. Thus, as an example, the at least one control system may comprise at least one data processing device having a software code stored thereon comprising a number of computer commands. The control system may provide one or more hardware elements for performing one or more of the named operations and/or may provide one or more processors with software running thereon for per-forming one or more of the named operations. The control system may comprise one or more programmable devices such as one or more computers, application-specific integrated circuits (ASICs), Digital Signal Processors (DSPs), or Field Programmable Gate Arrays (FPGAs) which are configured to perform steps b) and c). Additionally or alternatively, however, the control system may also fully or partially be embodied by hardware. The control system may comprise the routing system for calculating the routes and at least one executing unit for execution of movements of the carriers according to the planned routes. The control system may comprise multiple routing systems and multiple execution units. For example, the transport plane may be split into multiple sub-systems, each separately routed and executed, with interfaces between the subsystems for handing over the carriers.

The term "route" as used herein is a broad term and is to be given its ordinary and customary meaning to a person of ordinary skill in the art and is not to be limited to a special or customized meaning. The term specifically may refer, without limitation, to a set of partial routes from a start position to a final destination position which is calculated, planned or assigned to a carrier. The route may be divided into one or more partial routes to intermediate destinations. The start position may be a logical position where the carrier stands on the transport plane when the algorithm starts calculating the route. The final destination position may be a logical position on the transport plane where the carrier needs to go to. Final destination positions are logical positions on the transport plane which have in particular a special functionality, e.g. where a sample tube, a part of the sample, a complete carrier with payload, or a consumable is handed over from or to the transport plane to or from e.g. an analyzer or pre- or post-analytical system or storage system. For example, the complete carrier with payload may be handed over, e.g. if the sample transport technology is used inside an analyzer as well. For a manufacturing site, a final destination position may be in particular a logical position corresponding to a machine station performing some manufacturing process on a semi-finished good. A start position for one carrier can also be in particular a final destination position for another carrier or more in particular for the same carrier. For a storage system a final destination position can be at a position where a good transported by the carrier can be stored or the carrier including or excluding its load can be positioned for being stored. Inside an instrument the final destination can be at a processing unit, such as for example a pipetting, mixing, incubation or detection unit.

The term "routing system" as used herein is a broad term and is to be given its ordinary and customary meaning to a person of ordinary skill in the art and is not to be limited to a special or customized meaning. The term specifically may refer, without limitation, to an arbitrary system configured for calculating routes for moving the carriers on the transport plane. The routing system may comprise at least one data processing device. The routing system may be configured for using at least one algorithm, in particular denoted as routing algorithm. A routing algorithm may be an algorithm calculating a route for each carrier on the transport plane from a start position to an intermediate destination position towards a final destination position. The routing algorithm may calculate several straight moves for each route starting with the current position of the carrier on a logical position as a starting position to an intermediate destination position. The planned route, also denoted as routing plan, may comprise all moves or only the next few moves to carry out until a second final destination is reached. After the final destination has been reached, a new destination with new partial routes may be assigned to the carrier or the carrier may be parked while waiting for a new assignment.

The calculation of the routes may comprise determining shortest paths for the carriers across the transport plane from the start position to the final destination position. The routing algorithm may be used for determining shortest paths for the carriers across the transport plane. The shortest paths may comprise individual shortest paths, such as shortest paths for each single carrier, and/or cooperative shortest paths, such as paths which are not necessarily the shortest for each single carrier but the paths of all carriers together tend to be the shortest possible. The algorithm may be selected from the group consisting of: a A*-algorithm; a Windowed Hierarchical Cooperative A*-algorithm (WHCA*); a D*-algorithm; a Dijkstra's algorithm.

The term "path", also denoted as "free path", is a broad term and is to be given its ordinary and customary meaning to a person of ordinary skill in the art and is not to be limited to a special or customized meaning. The term specifically may refer, without limitation, to possible routes for moving a carrier on the transport plane. Thus, the path may include a possibility for moving a carrier on the transport plane which, however, does not necessarily have to be executed. The term "path", as used herein, may be used synonymously to the term "passage" or "transport passage" as outlined below.

For example, a WHCA* search algorithm may be used for calculating the routes. With respect to WHCA* algorithm reference is made, e.g. to Silver, D., 2005, "Cooperative pathfinding", Young, R. M., and Laird, J. E., eds., AIIDE, 117-122. AAA I Press and to WO 2021/228733 A1. The WHCA* search algorithm may be an informed search algorithm such as A* or D* searching algorithm. For each carrier with a final destination the search algorithm calculates a route from the start position to an intermediate destination position on nodes within the cooperative search window of time length T towards their respective final destination position. The search is cooperative because the route can only pass on free time windows of logical positions, meaning these logic positions may be not reserved at that time by other carriers. For the logical positions with free time windows needed the required duration of the free time window will change from "free" to "reserved" for the required time slot of the respective logical positions. So the free time window will be split into a reserved time window and one or two further free time windows. The search is hence cooperative for the cooperative time window T by respecting the reserved time windows for other carriers of the logical positions. The WHCA* algorithm may be designed for planning a route for each carrier individually, wherein cooperation may be obtained using a reservation table.

As outlined above, the routing system may be configured to calculate routes for all carriers on the transport plane by modeling the transport plane with a graph of nodes. To do so, the routing system may be configured to determine reserved and free time windows for each node. To calculate routes for the carriers, the routing system may use a windowed hierarchical cooperative informed search algorithm with cooperative time window T. In particular the cooperative informed search algorithm is a Dijkstra-, Bellman-Ford- or more in particular an A*-algorithm. T is typically in the range of 1 to 300 secs, in particular from 1 to 60 secs, more particular 10 secs. The routing system may be configured to assign an individual reservation length as a number of nodes for the next move on logical positions with free time windows for each carrier, so that the carriers start and stop individually. The executing unit may be configured for executing the planned routes for transporting the carriers from their respective start position to their respective final position.

The calculation of the routes may comprise planning the routes. The routing system may be configured for determining optimal routes for the carriers across the transport plane. The optimal route may be determined in terms of at least one optimization objective such as one or more of time, resource consumption, cost, wear balancing, good overall transport performance. Since the routing algorithm used may be cooperative, the routing system may take care that all carriers find their way through in a net efficient way, if necessary, sacrificing the shortest times to the final destinations of some individual carriers. The optimal route for a respective carrier may be a route selected from a plurality of possible routes which minimizes the optimization objective, e.g. the time needed for reaching its final destination position.

The control system may comprise at least one executing unit configured for executing the calculated routes. The executing unit may be configured for executing moves of the carrier considering the calculated route. The term "move" may refer to an "action" and may not include the waiting time before the next move will take place. A move may be defined as one movement of a carrier in a straight line, starting from one logical position and stopping at a second, different logical position. A move can comprise a displacement of a carrier over a distance of one or multiple logical positions. The move length may be a number of logical positions for each move. For example, a move may be a straight-line displacement without stopping the carrier in between. Moving from a first final destination to a second final destination may be carried out in one or more moves with intermediate destinations. The intermediate destination may also be a logical position. Each move has a start and a stop on a logical position. The stop of a last move of a route is either an intermediate destination or a final destination.

The method comprises the following steps which, specifically, may be performed in the given order. It shall be noted, however, that a different order is also possible. Furthermore, it is also possible to perform one or more of the method steps once or repeatedly. Additionally, it is possible to perform two or more of the method steps simultaneously or in a timely overlapping fashion. The method may comprise further method steps which are not listed.

The method comprises the steps:
a) defining a global pattern of safe points and applying the global pattern on the transport plane by using the routing system, wherein safe points are logical positions selected in view of a range of motion for a carrier occupying said logical position such that on the safe points a carrier can be placed and can be moved away again, wherein the global pattern is applied onto the transport plane independently of module boundaries;
b) calculating partial routes for the carriers so that an end position of each partial route is either one of the safe points or has a free path to one of the safe points to be reachable in the next partial route by using the routing system.

The method may be computer-implemented. The term "computer implemented method" as used herein is a broad term and is to be given its ordinary and customary meaning to a person of ordinary skill in the art and is not to be limited to a special or customized meaning. The term specifically may refer, without limitation, to a method involving at least one computer and/or at least one computer network. The computer and/or computer network may comprise at least one processor which is configured for performing at least one of the method steps of the method according to the present invention. For example, each of the method steps is performed by the computer and/or computer network. The method may be performed completely automatically, such as without user interaction.

The term "safe point" is a broad term and is to be given its ordinary and customary meaning to a person of ordinary skill in the art and is not to be limited to a special or customized meaning. The term specifically may refer, without limitation, to a logical position selected in view of a range of motion for a carrier occupying said logical position. The range of motion may be that a carrier can be placed on the safe point and can be moved away again, in particular in the next partial route. While a safe point and the path to the safe point may be reserved for a carrier, other carriers still can drive over said safe point. But these carriers may not be allowed to stop at said safe point. The safe point may be a logical position different from a transport position. Specifically, the grid of logical positions defined on the transport plane may comprise safe points and transport positions, wherein a logical position of the grid may be either a safe point or a transport position. The safe points may be linked to each other by one or more connected transport positions, specifically providing at least one path from one safe point to another safe point via one or more connected transport positions. The safe point may provide a rest or a halt position to a carrier, specifically such that a carrier resting or halting on a safe point may not disturb movement of other carriers moving on the transport plane.

By using safe points, it may be possible to provide at least one free logical position to a stopping and/or waiting carrier, for example such that there will always be at least one logical position to make a next move to. This may provide a situation where carriers can never block each other completely and, thus, avoiding deadlock situations. Deadlock situation may refer to a situation where carriers block each other in such a way that some or all of the carriers would never be able again to move forwards to reach their destination location. With respect to safe points, reference is made to WO 2021/228733 A1. The term "deadlock" is a broad term and is to be given its ordinary and customary meaning to a person of ordinary skill in the art and is not to be limited to a special or customized meaning. The term specifically may refer, without limitation, to any situation in which no carrier of a region of the transport plane can proceed because each waits for another carrier to move and/or in which all logical positions which can be reached are occupied.

The term "pattern" is a broad term and is to be given its ordinary and customary meaning to a person of ordinary skill in the art and is not to be limited to a special or customized meaning. The term specifically may refer, without limitation, to a template comprising an arbitrary selection of logical positions. The term "global pattern" is a broad term and is to be given its ordinary and customary meaning to a person of ordinary skill in the art and is not to be limited to a special or customized meaning. The term specifically may refer, without limitation, to a pattern independently of transport module boundaries. The global pattern may extend over the whole transport plane or over defined areas of the transport plane and/or may comprise logical positions of at least two different transport modules. The global pattern may not be defined per transport module. The global pattern may be a pattern template which may be separately applied onto the whole transport surface or onto defined areas of the transport plane, independently of transport module boundaries. The global pattern may comprise a repetitive pattern of safe points that can be projected and/or draped onto the whole transport plane or onto defined areas of the transport plane.

The global pattern of safe points may be selected such that even in case all of the safe points of the pattern are occupied by carriers moving of the carriers from the safe points is possible. The global pattern of safe points may be selected such that each of the safe points has at least one neighboring position on the transport plane which is not a safe point. For example, the global pattern of safe points may be selected such that each of the safe points has at least two neighboring positions on the transport plane which are not safe points. Other embodiments are possible.

For example, a safe point can have one or more safe points as neighboring points. For example, at least one point surrounding a safe point may not be a safe point. A safe point may not be surrounded completely by other safe points at each side.

For example, the global pattern of safe points may be selected such that the safe points are not neighboring logical positions on the transport plane. For example, the global pattern of safe points may be selected such that the safe points are separated by at least one logical position not being a safe point.

For example, a pattern of safe point pattern may be used where some safe points are completely surrounded by other safe points. For example, for " O" being a non-safe point, "X" being a safe point, an exemplary embodiment may be
OOOOOO
OXXXOO
OXXXOO
OXXXOO
OOOOOO.

The safe-point in the center of the 3x3 square of safe points may be surrounded by non-safe points. Even if the safe points are occupied, they should eventually empty and the one in the center should then be able to get out.

The global pattern of safe points may be selected such that each of the safe points has at least one path to one or more of the carrier's final or intermediate destination position or another safe point having at least one path to the carrier's final destination. Thus, even if all safe points in the neighborhood of a carrier on a safe point are occupied, movement of the carrier may still be possible to either the final destination of the carrier or to one safe point being closer to the final destination. Thus, a carrier on the safe point can be removed from the safe point even if all safe points in the neighborhood of this safe point are occupied with other carriers. The control system may be configured for calculating partial routes with the boundary condition that all carriers can only stop onto safe points and not in the corridors and/or empty spaces or having at least free path to a safe point in the next partial route. The control system may be configured for calculating partial routes with the boundary condition that all carriers are on a safe point for every move before the carrier may start to move. The control system may be configured for calculating partial routes with the boundary condition that safe points are defined for every partial path and must be reachable, so that in situations of high traffic, only safe points may be occupied.

Various global patterns of safe points may be possible. For example, the global pattern of safe points may be direction dependent, e.g. for a specific travel direction. The advantage of having direction dependent safe points may be that two carriers placed on two neighboring safe points will not have opposite directions. One of the carriers would have to move around the other to continue movement. The pattern may comprise a plurality of clusters of safe points. A transport passage following a preferred direction of movement may be arranged around each cluster of safe points.

For example, the global pattern may be a repetitive pattern. For example, the pattern may be repetitive with a period, e.g. of three positions in x and y directions. However, other non-repetitive patterns are possible, e.g. additional safe points can be added or eliminated. A different number of safe points is used for each transport module.

Defining of the global pattern may comprise selecting a predefined global pattern out of one or more global patterns. For example, the routing system may comprise at least one database, folder or hard coded information, containing a plurality of predefined global patterns, e.g. for different transport modules and/or applications.

The definition of the global pattern may comprise optimizing per logical position whether it should be a safe point or a transport position. The term "optimizing" is a broad term and is to be given its ordinary and customary meaning to a person of ordinary skill in the art and is not to be limited to determining a "best" solution for a specific criterion or metric. The term "transport position" is a broad term and is to be given its ordinary and customary meaning to a person of ordinary skill in the art and is not to be limited to a special or customized meaning. The term specifically may refer, without limitation, to a logical position other than a safe point which can be used for routing and/or moving, for example without the constraints for safe points. Optimizing per logical position may be complex, as the type of position is optimized for each position individually.

The optimization may be carried out by simulating the performances for each optimization iteration. The optimization may be carried out by optimizing a cost function incorporating, for example one or more of the following rules:
- Preventing patterns causing zig-zagging of carriers between carriers on safe points.
- More alternative transport passages to reach at least each side of the transport plane without crossing safe points are preferred over less passages.
- Perpendicular to these passages, ideally as many as possible connecting passages are located to enable switching between all transport passages, e.g. that at least after each 2, 3 or more safe points a connecting transport passage shall be located.
- Basic rule for a valid global pattern, e.g. one or more of
   - at least one transport position neighboring, for example directly adjacent to, each safe point;
   - at least one neighboring transport positions for every pattern of safe points; and
   - at least one path for each safe point to one or more of the carrier's final or intermediate destination position or another safe point having at least one path to the carrier's final destination.
- No safe points at special function positions, e.g. at special function positions, e.g. at an starting position of a route, an end position of a route, or locations to connected instruments and the like.
- Matching the global pattern to an existing pattern at an interface with another transport plane with a ready defined pattern and/or at manually defined points or areas.

The term "passage", also referred to as "transport passage", is a broad term and is to be given its ordinary and customary meaning to a person of ordinary skill in the art and is not to be limited to a special or customized meaning. The term specifically may refer, without limitation, to a plurality of connected transport positions on the transport plane. The passage may provide at least one path for moving the carriers from a starting position to a final destination position. The passage may comprise transport positions providing at least one path for moving the carriers from each input location to each output location. The passage may comprise at least one path of logical positions not comprising any safe points from each input location to each output location.

The optimization may be performed by using at least one optimization algorithm, specifically a genetic algorithm, simulated annealing or Monte Carlo searches. As an example, the Monte Carlo searches may use random shifts of the global pattern and determine if the shifted global pattern would result in a higher score and/or less than a previously best fit. Simulated annealing may comprise small shifts near an almost optimal best fit and, if no improvements can be found anymore, performing a random big shift.

The transport plane may be split into multiple domains. The multiple domains may be defined independently from transport modules. The multiple domains may be optimized separately. The multiple domains may be optimized in parallel, also denoted as concurrent processing, or sequentially with the condition of a valid pattern fit at the interface between the global patterns or where the logical positions at interfacing points are fixedly defined with a condition of being either safe points or transport positions. A separate global pattern may be applied onto each of the multiple domains.

The method comprises applying the global pattern on the transport plane by using the routing system. The term "applying the global pattern" is a broad term and is to be given its ordinary and customary meaning to a person of ordinary skill in the art and is not to be limited to a special or customized meaning. The term specifically may refer, without limitation, to fitting and/or projecting and/or transferring and/or printing and/or aligning the defined global pattern on the transport plane. The global pattern may constitute a coordinate system of logical positions. The applying of the global pattern may comprise transferring the coordinate system of the global pattern to the coordinate system of the transport plane. The global pattern may be applied onto the whole transport plane or on defined areas of the transport plane. The global pattern is applied onto the transport plane independently of module boundaries. The term "independently of module boundaries" is a broad term and is to be given its ordinary and customary meaning to a person of ordinary skill in the art and is not to be limited to a special or customized meaning. The term specifically may refer, without limitation, to inter-module and/or cross-module.

Applying the global pattern onto the transport plane may comprise positioning the global pattern onto the transport plane. Positioning the global pattern may comprise defining an origin of the global pattern on a logical position of the transport plane. The most upper left position of the transport plane may automatically equal the (0,0) coordinate of the global pattern. Alternatively, a user, e.g. a designer or configuration specialist, may apply the global pattern by hand and define where the (0,0) coordinate should be, e.g. using a software tool like a CAD program to find the best alignment of the global pattern onto the logical positions of the transport plane.

Applying of the global pattern onto the transport plane may comprise determining a best fit of the global pattern onto the grid of logical positions. Determination of the best fit may comprise optimizing the alignment using at least one algorithm. For example, applying the global pattern onto the transport plane may comprise defining an offset in one or more directions of the origin of the global pattern and/or defining a rotation of the global pattern relative to the origin and/or to an orientation of the transport plane. The best fit may be an alignment of the global pattern with a specific offset and/or a specific rotation yielding the best performance and/or least problems for instance under intensive traffic situations. The determination of the best fit may comprise a simulation-based pattern fitting. For example, in case the pattern is repetitive, e.g. with a period of 3 positions in the x and y directions, there are only a limited number of unique pattern fits, e.g. 9. The best fit may be determined by trying all unique fits and running simulations of the transport plane to check which fit(s) gave the best transport performance and/or least problems for instance under intensive traffic situations. Next to the best fit, also different predefined patterns can be used. Additionally or alternatively, a rule-based optimization to fit the global pattern on the logical positions may be used. Global pattern matching on the transport plane can be done in different ways, resulting in different symmetries and/or asymmetries and different numbers of safe points. The determination of the best fit of the global pattern onto the grid of logical positions may be performed considering hardware conditions, e.g. locations of connected instruments, and/or performance of the distribution system. The determination of the best fit of the global pattern onto the grid of logical positions may be performed using simulation of the distribution system performance. For example, in case the pattern is repetitive, there is a limited number of different fits, which makes "brute force" simulation of all possibilities a feasible method.

Applying of the global pattern onto the transport plane may comprise locally adapting the global pattern to the transport plane, such as by changing one or more safe points into transport positions or vice versa. Applying the global pattern may include eliminating and/or manually changing of the global pattern in areas that would not benefit from this method or positions where either safe points or transport positions are unwanted. The control system may consider that defining many safe points also increases the "storage" capacity during congestions. The adaptation may comprise changing one or more safe points into transport positions. Safe points at an input location or an output location of the transport plane and/or at a crossing position and/or in case of a narrow transport plane may be changed into transport positions. The input location may comprise one or more logical positions on the transport plane at which the carriers are transferred out of a connected instrument into the transport plane. The output location may comprise one or more logical positions on the transport plane at which the carriers are transferred into a connected instrument from the transport plane. The input location and the output location may comprise transfer locations at which the carriers are transferred in or out of the transport plane. The input location and output location may comprise logical positions where, for example, a pipetting station will aspirate a portion of a sample inside a sample container. For example, safe points at an input location or an output location of the transport plane may be changed into transport positions in order to avoid blocking of a connected instrument. For example, safe points at a crossing position may be changed into transport positions in order to prevent that intensive traffic congestion caused by traffic in one direction may block crossing traffic. Hence, the control system may decide to reduce the number of safe points on the crossing. For example, safe points in case of a narrow transport plane may be changed into transport positions, e.g. surfaces with only one or a few positions width. Such safe points could cause too strong blocking of traffic. A narrow transport plane may refer to transport areas of one or a few logical positions width, for example transport areas of equal or less than five logical positions width, for example transport areas of equal or less than three logical positions, specifically of one to five logical positions width, more specifically of two or three logical positions width.

Applying of the global pattern onto the transport plane may comprise automatically adapting the global pattern, e.g. fully automated, such as via a software or semi-automatically via a software that optimizes the global pattern for the transport plane. Automatically adapting the global pattern may comprise using computer algorithms to find the optimal positioning of the patterns onto the transport surface.

Step a), defining a global pattern, of the method may be performed during an initialization of the distribution system and step b), calculating partial routes, may be performed after the initialization of the distribution system.

The method may comprise analyzing traffic load in at least one area of the transport plane using computer algorithms. The method may comprise determining at least one optimized pattern. The term "optimized pattern" is a broad term and is to be given its ordinary and customary meaning to a person of ordinary skill in the art and is not to be limited to a pattern of safe points fulfilling best at least one predefined criterion. The method may comprise proposing the optimized pattern, e.g. to the operator, such as by using a user interface. The method may comprise automatically changing the global pattern for the optimized one for that area.

The method may comprise re-applying at least one of the global patterns, e.g. in case the control system detects that the initially applied global pattern causes inefficiencies and should be replaced. Additionally or alternatively, the method may comprise making local changes to some of the pattern positions.

In a further aspect, a distribution system is disclosed. The distribution system comprises
- a number of carriers configured for carrying one or more objects,
- a transport plane configured for supporting the carriers, wherein the transport plane comprises a plurality of transport modules, wherein a grid of logical positions is defined on the transport plane,
- a drive system configured for moving the carriers on the transport plane between the logical positions,
- a control system configured for controlling the drive system, wherein the control system comprises a routing system configured for calculating routes for the carriers, wherein the control system is configured for performing the method according to the present invention.

For details, options and definitions, reference may be made to the method described as discussed above or as described in more detail below.

The method and the distribution system according to the present invention may provide a large number of advantages. Specifically, the method and the distribution system according to the present invention may avoid deadlock problems and enhance system performance. For example, by using any one of the method according to the present invention, it may be possible to modify the global patterns of safe points, for example when equipment failures disable specific safe points e.g. in order to maintain corridors for movement in between safe points. Further, it may be possible to adapt the global pattern of safe points to geometries other than square geometries, such as to a mix of different transport module dimensions, shapes or sizes, specifically including rectangular transport modules.

Further disclosed and proposed herein is a computer program including computer-executable instructions for performing a method according to the present invention in one or more of the embodiments enclosed herein when the program is executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps as indicated above may be performed by using a computer or a computer network, preferably by using a computer program.

Further disclosed and proposed herein is a computer program product having program code means, in order to perform a method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute a method according to one or more of the embodiments disclosed herein.

Further disclosed and proposed herein is a computer program product with program code means stored on a machine-readable carrier, in order to perform a method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing a method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing of the method according to one of the embodiments described in this description, if the program code means are executed on a computer or on a computer network.

Summarizing and without excluding further possible embodiments, the following embodiments may be envisaged:
A method of operating a distribution system is described, wherein the distribution system comprises
- a number of carriers configured for carrying one or more objects,
- a transport plane configured for supporting the carriers, wherein the transport plane comprises a plurality of transport modules, wherein a grid of logical positions is defined on the transport plane,
- a drive system configured for moving the carriers on the transport plane between the logical positions,
- a control system configured for controlling the drive system, wherein the control system comprises a routing system configured for calculating routes for the carriers,
wherein the method comprises the steps:
a) defining a global pattern of safe points and applying the global pattern on the transport plane by using the routing system, wherein safe points are logical positions selected in view of a range of motion for a carrier occupying said logical position such that on the safe points a carrier can be placed and can be moved away again, wherein the global pattern is applied onto the transport plane independently of module boundaries;
b) calculating partial routes for the carriers so that an end position of each partial route is either one of the safe points or has a free path to one of the safe points to be reachable in the next partial route by using the routing system.

In an embodiment, the global pattern is a repetitive pattern.

In an embodiment, step a) is performed during an initialization of the distribution system and step b) is performed after the initialization of the distribution system.

In an embodiment, the control system comprises at least one executing unit configured for executing the calculated routes.

In an embodiment, at least one of the transport modules is a non-square transport module and/or the transport modules have different sizes.

In an embodiment, applying of the global pattern onto the transport plane comprises positioning the global pattern onto the transport plane, wherein positioning the global pattern comprises defining an origin of the global pattern on a logical position of the transport plane.

In an embodiment, applying of the global pattern onto the transport plane comprises determining a best fit of the global pattern onto the grid of logical positions.

In an embodiment, the determining of the best fit of the global pattern onto the grid of logical positions is performed considering hardware conditions and/or performance of the distribution system.

In an embodiment, applying of the global pattern onto the transport plane comprises locally adapting the global pattern to the transport plane, such as by changing one or more safe points into transport positions or vice versa.

In an embodiment, the adapting comprises changing at one or more safe points into transport positions, wherein safe points at an input location or an output location of the transport plane and/or at a crossing position and/or in case of a narrow transport plane are changed into transport positions.

In an embodiment, the applying of the global pattern onto the transport plane comprises automatically adapting the global pattern.

In an embodiment, defining of the global pattern comprises selecting a predefined global pattern out of one or more global patterns.

In an embodiment, the defining of the global pattern comprises optimizing per logical position whether it should be a safe point or a transport position.

In an embodiment, the optimization is carried out by simulating the performances for each optimization iteration and/or with one or more of the following rules:
- Preventing patterns causing zig-zagging of carriers between carriers on safe points.
- More alternative transport passages to reach at least each side of the transport plane without crossing safe points are preferred over less passages.
- Perpendicular to these passages, ideally as many as possible connecting passages are located to enable switching between all transport passages, e.g. that at least after each 2, 3 or more safe points a connecting transport passage shall be located.
- Basic rule for a valid global pattern, e.g. one or more of
   - at least one transport position neighboring, for example directly adjacent to, each safe point;
   - at least one neighboring transport positions for every pattern of safe points; and
   - at least one path for each safe point to one or more of the carrier's final or intermediate destination position or another safe point having at least one path to the carrier's final destination.
- No safe points at special function positions, e.g. at special function positions, e.g. at an starting position of a route, an end position of a route, or locations to connected instruments and the like.
- Matching the global pattern to an existing pattern at an interface with another transport plane with a ready defined pattern and/or at manually defined points or areas.

In an embodiment, the optimization is performed by using at least one optimization algorithm, specifically a genetic algorithm, simulated annealing or Monte Carlo searches.

In an embodiment, the transport plane is split into multiple domains onto each of which a separate global pattern is applied.

In an embodiment, the method is computer-implemented.

In an embodiment, the method comprises analyzing traffic load in at least one area of the transport plane using computer algorithms, wherein the method comprises determining at least one optimized pattern, wherein the method comprises proposing the optimized pattern, e.g. to the operator, such as by using a user interface and/or automatically changing the global pattern for the optimized one for that area.

In an embodiment, the method comprises re-applying at least one of the global patterns and/or making local changes to some of the pattern positions.

A distribution system is described comprising
- a number of carriers configured for carrying one or more objects,
- a transport plane configured for supporting the carriers, wherein the transport plane comprises a plurality of transport modules, wherein a grid of logical positions is defined on the transport plane,
- a drive system configured for moving the carriers on the transport plane between the logical positions,
- a control system configured for controlling the drive system, wherein the control system comprises a routing system configured for calculating routes for the carriers, wherein the control system is configured for performing a method of operating a distribution system according to any one of the embodiments relating to a method.

A computer program is described comprising instructions which, when the program is executed by the distribution system according to the preceding embodiment causing the distribution system to perform a method according to any one of the preceding embodiments relating to a method.

A computer-readable storage medium comprising instructions which, when the program is executed by the distribution system according to the embodiment relating to the distribution system cause the distribution system to perform a method according to any one of the embodiments relating to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows an embodiment of a distribution system in a schematic view;
- Figure 2: shows a flow chart of an embodiment of a method of operating a distribution system;
- Figure 3: shows an example of a module-based pattern of safe points;
- Figures 4A and 4B: show examples fits of global patterns of safe points;
- Figure 5: shows an exemplary example of a global patterns; and
- Figures 6A,6B, 7A, 7B: show further examples.

### Detailed description of the embodiments

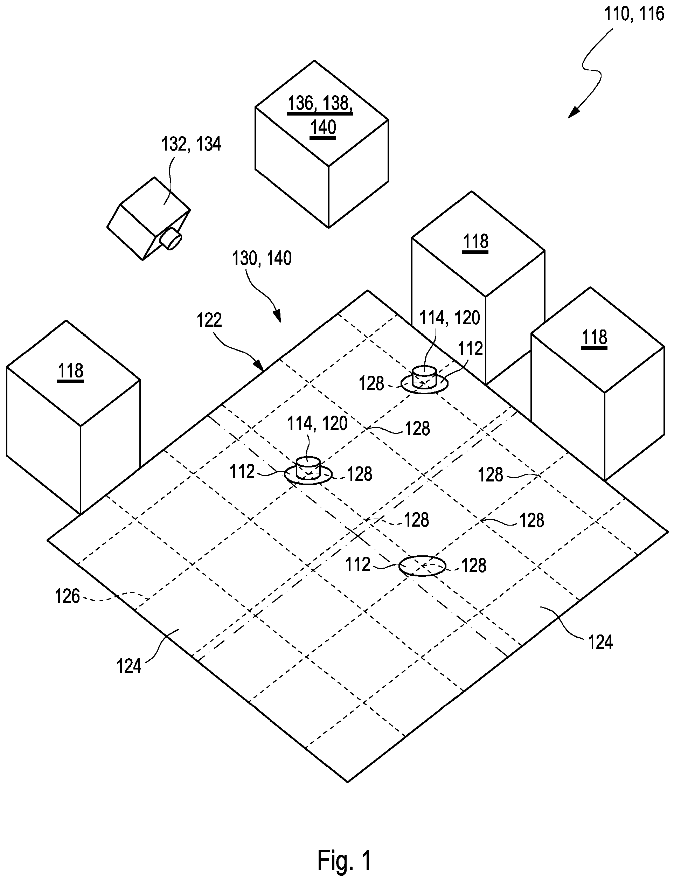

Figure 1 shows an exemplary embodiment of a distribution system 110 in a schematic view. The distribution system 110 comprises a number of carriers 112 configured for carrying one or more objects 114. In the example of Figure 1, the distribution system 110 may be an element of a laboratory automation system 116 allowing distributing carriers 112 to a target destination within the laboratory automation system 116. Distribution systems 110 may be used in laboratory automation systems 116 comprising a number of laboratory stations 118, for example pre-analytical, analytical and/or post-analytical stations. Thus, as an example, the object 114 may be at least one sample container 120, such as laboratory diagnostic containers or vessels.

The distribution system 110 further comprises a transport plane 122 configured for supporting the carriers 112. The transport plane 122 comprises a plurality of transport modules 124. A grid 126 of logical positions 128 is defined on the transport plane 122. As can be seen in Figure 1, the transport modules 124 are indicated by dotted lines and the grid 126 of logical positions 128 is indicated by dashed lines. The transport plane 122 may be a modular transport plane 122 formed by interconnected transport modules 124. The transport modules 124 may be interconnected such that the carriers 112 may move from each of the transport modules 124 directly or indirectly to each of the other modules 124. The interconnected transport modules 124 may form a continuous transport plane 122, which may also be denoted as transport surface. Below each transport module 124, a number of the electro-magnetic actuators (not shown in Figure 1) can be stationary arranged in rows and columns. The electromagnetic actuators can be configured to move a carrier 112 on a top surface of the transport modules 124 along a row of the rows or along a column of the columns by applying a magnetic move force to the carrier 112. Each of the transport modules 124 may be limited by module boundaries. The transport modules 124 may have different shapes and/or sizes. In the image section shown in Figure 1, the transport modules 124 may comprise only square modules. However, at least one of the transport modules 124 may be a non-square transport module.

The distribution system 110 comprises a drive system 130 configured for moving the carriers 112 on the transport plane 122 between the logical positions 128. The drive system 130 may be at least partially implemented in the carriers 112 itself. In the example shown in Figure 1, the carriers 112 may be passive carriers. For instance, a magnetic device may be fixed in the carrier 112 and a magnetic force provided by magnetically active and drivable elements, such as electro-magnetic actuators below the transport modules 124, apply electromagnetic forces onto the carriers 112 such that they will move by the generated electro-magnetic fields. The coils can be installed under, above, besides or in the transport plane 122. For instance, an arrangement of magnetic coils underneath the transport plane 122 is described e.g. in EP 2 566 787 or WO 2013/098202. In these systems, the drive system 130 may define the logical positions 128 by its hardware limitations. Logical positions 128 may be defined above an electro-magnetic actuator. At these positions, it may be possible to stop the carrier 112 and to change its direction with the next move.

Each of the logical positions 128 may be configured for being occupied by only one carrier 112. Thus, two carriers 112 cannot share one logical position 128 at the same time. The distribution system 110 may be configured for moving a plurality of carriers 112 on the transport plane 122 via respective calculated partial routes, wherein the respective route may lead from a first logical position 128 to a second logical position 128, i.e. the end position of the respective partial route.

A logical position 128 can be any position reachable by the carriers 112 or any position where the carriers 112 can change direction, be parked or can be identified by an identification or registration system 132. Identification and registration systems 132 can be a camera system 134 or optical sensors and scanners, like laser scanners, identifying any optical signature on the carriers 112 or object 114 such as its size, its type, or a barcode or QR code, Hall sensors, capacitive sensors, and the like. Alternatively or in addition, a RFID-reader system reading a unique RFID of the carrier 112 or object 114 on the carrier 112 or sensors inside the transport plane 122 can be used to identify positions and to localize the carriers 112. The identifying of the positions may comprise using sensors to identify at which location a carrier 112 is moving or standing still. A further option can be high precision GPS, in particular enhanced with one or more of local beacons, Bluetooth, Wi-Fi, GSM signals as well as acceleration sensors.

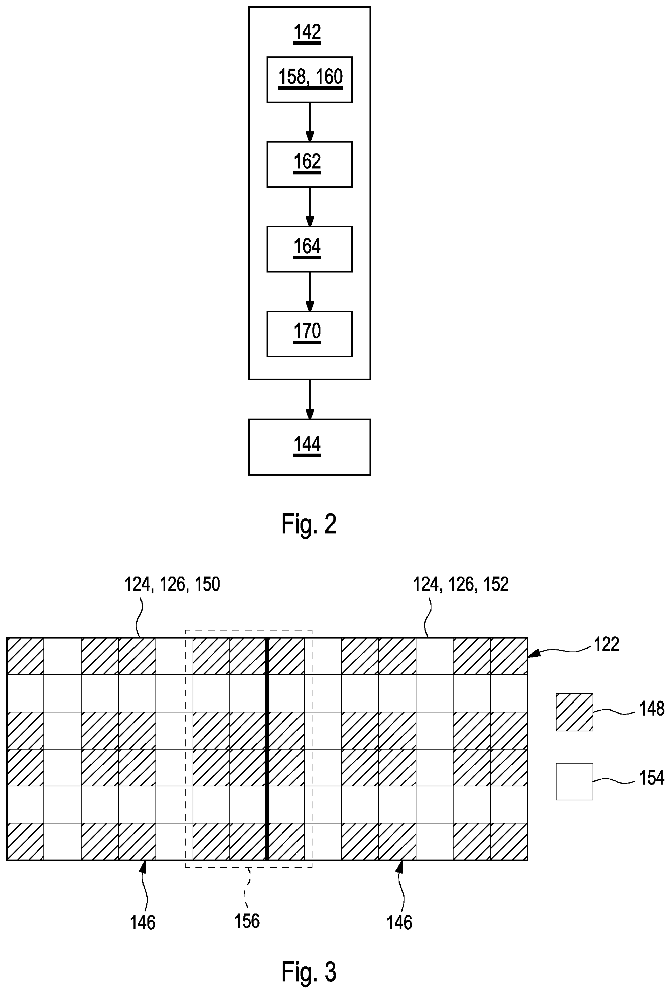

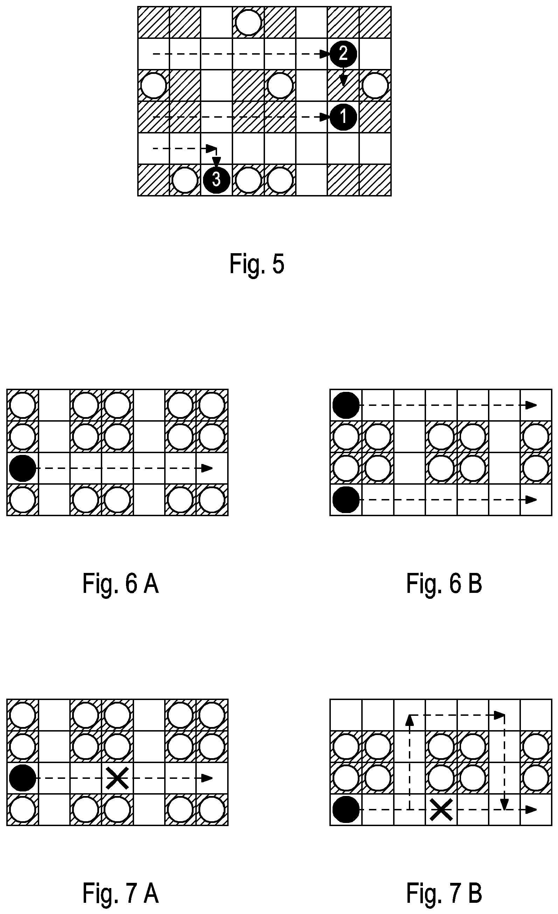

The distribution system 110 further comprises a control system 136 configured for controlling the drive system 130. The control system 136 comprises a routing system 138 configured for calculating routes for the carriers 112. The control system 136 is configured for performing the method according to the present invention, for example as described with reference to Figures 2 and 5. The control system 136 may comprise at least one executing unit 140 configured for executing the calculated routes. The executing unit 140 may be configured for executing moves of the carrier 112 considering the calculated route.

Figure 2 shows a flow chart of an exemplary embodiment of a method of operating a distribution system 110. The distribution system 110 may, as an example, be embodied as shown in Figure 1. Specifically, the distribution system 110 comprises the number of carriers 112 configured for carrying one or more objects 114. The transport plane 122 is configured for supporting the carriers 112. The transport plane 122 comprises the plurality of transport modules 124. The grid 126 of logical positions 128 is defined on the transport plane 122. The drive system 130 is configured for moving the carriers 112 on the transport plane 122 between the logical positions 128. The control system 136 is configured for controlling the drive system 130. The control system 136 comprises the routing system 138 configured for calculating routes for the carriers 112.

The method comprises the following steps which, specifically, may be performed in the given order. It shall be noted, however, that a different order is also possible. Further, it is also possible to perform one or more of the method steps once or repeatedly. Further, it is possible to perform two or more of the method steps simultaneously or in a timely overlapping fashion. The method may comprise further method steps which are not listed.

The method comprises the steps:
a) (denoted by reference number 142) defining a global pattern of safe points and applying the global pattern on the transport plane 122 by using the routing system 138, wherein safe points are logical positions 128 selected in view of a range of motion for a carrier 112 occupying said logical position 128 such that on the safe points a carrier 112 can be placed and can be moved away again, wherein the global pattern is applied onto the transport plane 122 independently of module boundaries;
b) (denoted by reference number 144) calculating partial routes for the carriers 112 so that an end position of each partial route is either one of the safe points or has a free path to one of the safe points to be reachable in the next partial route by using the routing system 138.

The method may specifically be advantageous for distribution systems 110 comprising non-square transport modules 124 and/or transport modules 124 of different sizes. Figure 3 shows an example of a module-based pattern 146 of safe points 148. In the example of Figure 3, the transport plane 122 comprises a first non-square transport module 150 and a second non-square transport module 152 each consisting of a grid 126 of 6 times 7 logical positions 128. The module-based pattern 146 of safe points 148 and transport positions 154 may be defined for each of the transport modules 150, 152. Specifically, these module-based local patterns 146 may be the same for each of the transport modules 150, 152. As highlighted by the incorrect safe pattern occurring due to interfacing 2 local, module-defined patterns 156 in Figure 3, the module-based pattern 146 of safe points 148 may lead to invalid and/or inefficient patterns. As can be seen in Figure 3, too many logical positions 128 may be allocated in the area 156 as safe points 148, specifically at a boundary of the first 150 and second non-square transport module 152.

This problem may be avoided by using the global pattern of safe points 148, which may specifically be not defined per transport module 124 but may be a global pattern being applied onto the transport plane 122 independently of transport module boundaries, for example being applied to the whole transport plane 122 or to defined areas of the transport plane 122. Looking again at Figure 2, at the method, various global patterns of safe points 148 may be possible. For example, the global pattern may be a repetitive pattern. For example, the pattern may be repetitive with a period, e.g. of three positions in x and y directions. However, other non-repetitive patterns are possible, e.g. additional safe points can be added or eliminated. A different number of safe points 148 is used for each transport module 124.

As shown in Figure 2, the defining of the global pattern may comprise selecting a predefined global pattern (denoted by reference number 158) out of one or more global patterns. For example, the routing system 138 may comprise at least one database having a plurality of predefined global patterns, e.g. for different transport modules 124 and/or applications.

The definition of the global pattern may comprise optimizing per logical position 128 whether it should be a safe point 148 or a transport position 154 (denoted by reference number 160). The optimization may be carried out by simulating the performances for each optimization iteration. The optimization may be carried out by optimizing a cost function incorporating, for example one or more of the following rules:
- Preventing patterns causing zig-zagging of carriers 112 between carriers 112 on safe points 148.
- More alternative transport passages to reach at least each side of the transport plane without crossing safe points are preferred over less passages.
- Perpendicular to these passages, ideally as many as possible connecting passages are located to enable switching between all transport passages, e.g. that at least after each 2, 3 or more safe points 148 a connecting transport passage shall be located.
- Basic rule for a valid global pattern, e.g. one or more of: at least one transport position neighboring, for example directly adjacent to, each safe point;
   - at least one neighboring transport positions for every pattern of safe points; and
   - at least one path for each safe point to one or more of the carrier's final or intermediate destination position or another safe point having at least one path to the carrier's final destination.
- No safe points 148 at special function positions, e.g. at an starting position of a route, an end position of a route, or locations to connected instruments and the like.
- Matching the global pattern to an existing pattern at an interface with another transport plane 122 with a ready defined pattern and/or at manually defined points or areas.

The optimization may be performed by using at least one optimization algorithm, specifically a genetic algorithm, simulated annealing or Monte Carlo searches. As an example, the Monte Carlo searches may use random shifts of the global pattern and determine if the shifted global pattern would result in a higher score and/or less than a previously best fit. Simulated annealing may comprise small shifts near an almost optimal best fit and, if no improvements can be found anymore, performing a random big shift.

The transport plane 122 may be split into multiple domains. The multiple domains may be defined independently from transport modules 124. The multiple domains may be optimized separately. The multiple domains may be optimized in parallel, also denoted as concurrent processing, or sequentially with the condition of a valid pattern fit at the interface between the global patterns or where the logical positions 128 at interfacing points are fixedly defined with a condition of being either safe points or transport positions. A separate global pattern may be applied onto each of the multiple domains.

Furthermore, applying the global pattern onto the transport plane 122 may comprise positioning the global pattern onto the transport plane 122. Positioning the global pattern may comprise defining an origin of the global pattern on a logical position 128 of the transport plane 122 (denoted by reference number 162). The most upper left position of the transport plane 122 may automatically equal the (0,0) coordinate of the global pattern. Alternatively, a user, e.g. a designer or configuration specialist, may apply the global pattern by hand and define where the (0,0) coordinate should be, e.g. using a software tool like a system configuration or CAD program to find the best alignment of the global pattern onto the logical positions 128 of the transport plane 122.

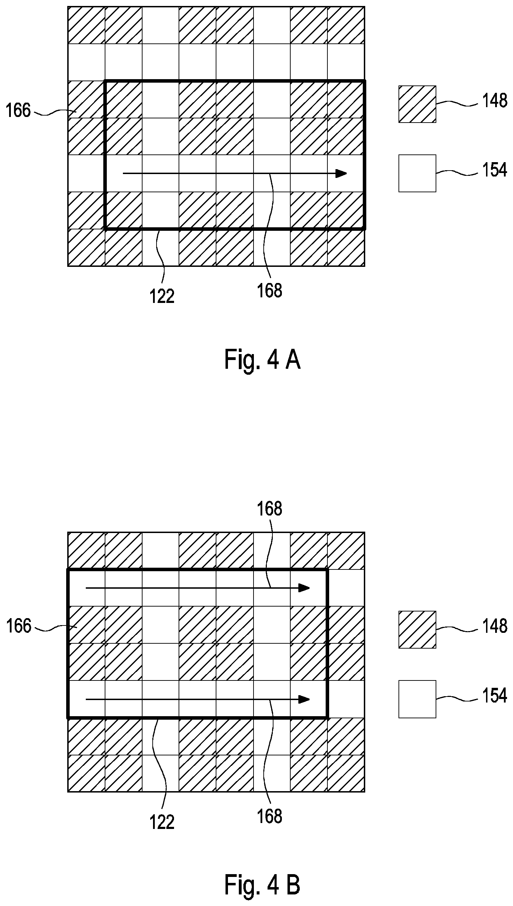

Applying of the global pattern onto the transport plane 122 may comprise determining a best fit of the global pattern onto the grid 126 of logical positions 128 (denoted by reference number 164). Defining the origin of the global pattern and determining the best fit may be performed in a common step, for example by shifting and/or rotating the global pattern to get the best fit. For example, a result may comprise information on the origin that the global pattern needs +X positions to be moved and -Y positions and for example +Z degrees be rotated relatively to the origin of the transport plane 122. The determination of the best fit may comprise optimizing the alignment using at least one algorithm. The effect of fitting the global pattern onto the grid 126 of logical positions 128 is shown in Figures 4A and 4B. Therein, examples of different fits of global pattern of safe points 148 onto the grid 126 of logical positions 128 are shown. In Figures 4A and 4B, by way of example, fitting of a global pattern template 166 with 7 times 8 logical positions 128 on a transport plane 122 comprising 4 times 7 logical positions 128 is shown. As can be seen from a comparison of Figures 4A and 4B, a number of safe points 148 may be different for different fits of the global pattern onto the grid 126 of logical positions 128, resulting in a different "packing" density of carriers 112 in case of congestions. Furthermore, the fit shown in Figure 4B comprises two transport passages 168, whereas the fit of Figure 4A only shows one transport passage 168, and, thus, the fit of Figure 4B may show better performance and may be more robust in case of extreme traffic densities. Additionally, the locations of the safe points 148 are different for the fits shown in Figure 4A and 4B. Consequences of different patterns are visualized in Figures 5, 6 and 7.

Determining of the best fit may comprise a simulation-based pattern fitting. For example, in case the pattern is repetitive, e.g. with a period of 3 positions in the x and y directions, there are only a limited number of unique pattern fits, e.g. 9. The best fit may be determined by trying all unique fits and running simulations of the transport plane 122 to check which fit(s) gave the best performance and/or least problems for instance under intensive traffic situations. Next to the best fit, also different predefined patterns can be used. Additionally or alternatively, a rule-based optimization to fit the global pattern on the logical positions 128 may be used. Global pattern matching on the transport plane 122 can be done in different ways, resulting in different symmetries and/or asymmetries and different numbers of safe points 148. Determining the best fit of the global pattern onto the grid 126 of logical positions 128 may be performed considering hardware conditions, e.g. locations of connected instruments, and/or performance of the distribution system 110. Determining the best fit of the global pattern onto the grid 126 of logical positions 128 may be performed using simulation of the distribution system 110 performance. Specifically in case the pattern is repetitive, there is a limited number of different fits, which makes "brute force" simulation of all possibilities a feasible method.

Looking at Figure 2, the applying of the global pattern onto the transport plane 122 may comprise locally adapting the global pattern to the transport plane 122 (denoted by reference number 170), such as by changing one or more safe points into transport positions or vice versa. Applying of the global pattern may include eliminating and/or manually changing of the global pattern in areas that would not benefit from this method or positions where either safe points 148 or transport positions 154 are unwanted. The control system 136 may consider that defining many safe points 148 also increases the "storage" capacity during congestions. The adaptation may comprise changing at one or more safe points 148 into transport positions 154. Safe points 148 at an input location or an output location of the transport plane 122 and/or at a crossing position and/or in case of a narrow transport plane 122 may be changed into transport positions 154. For example, safe points 148 at an input location or an output location of the transport plane 122 may be changed into transport positions 154 in order to avoid blocking of a connected instrument. For example, safe points 148 at a crossing position may be changed into transport positions 154 in order to prevent that intensive traffic congestion caused by traffic in one direction may block crossing traffic. Hence, the control system 136 may decide to reduce the number of safe points 148 on the crossing. For example, safe points 148 in case of a narrow transport plane 122 may be changed into transport positions 154, e.g. surfaces with only one or a few positions width. Such safe points 148 could cause too strong blocking of traffic.

Applying of the global pattern onto the transport plane 122 may comprise automatically adapting the global pattern, e.g. fully automated or semi-automated, such as via a software that optimizes the global pattern for the transport plane 122.

Figure 5 shows an example of a global pattern. This figure shows 2 allowed and 1 not-allowed final move or a partial plan. The white carriers do not have a plan for a new move (yet). The black carriers 1 and 2 are positioned at valid points as carrier 1 stopped at a safe position and carrier 2 has direct access to a safe position. Carrier 3 however is not at a safe position nor has it access to a neighboring safe position. Hence, the routing plan of 3 is invalid.

Figures 6A, 6B, 7A, 7B show further examples. These Figures show two examples of different patterns. The example in Figures 6A shows that the pattern A only provides 1 free corridor when the safe positions have been occupied by the white carriers. In figure 6B there are two corridors and consequently better performance, although the packing density of carriers without a plan for a next move is higher for pattern A. Figures 7A and 7B show that if under these circumstances a transport position will break down or a carrier will get stuck, the system with pattern A will get blocked (Figure 7A), whereas the system in Figure 7B will provide a connection to the second corridor and accordingly redundancy to continue the transport.

### List of reference numbers

- 110: distribution system
- 112: carrier
- 114: object
- 116: laboratory automation system
- 118: laboratory station
- 120: sample container
- 122: transport plane
- 124: transport module
- 126: grid
- 128: logical position
- 130: drive system
- 132: identification and registration system
- 134: camera system
- 136: control system
- 138: routing system
- 140: executing unit
- 142: defining and applying a global pattern
- 144: calculating partial routes
- 146: module-based pattern
- 148: safe point
- 150: first non-square transport module
- 152: second non-square transport module
- 154: transport position
- 156: incorrect safe pattern occurring due to interfacing 2 local, module-defined patterns
- 158: selecting a predefined global pattern
- 160: optimizing logical positions
- 162: defining an origin of the global pattern
- 164: determining a best fit of the global pattern
- 166: global pattern template
- 168: transport passage
- 170: adapting the global pattern

## Claims

1. A method of operating a distribution system (110), wherein the distribution system (110) comprises
- a number of carriers (112) configured for carrying one or more objects (114),
- a transport plane (122) configured for supporting the carriers (112), wherein the transport plane (122) comprises a plurality of transport modules (124), wherein a grid (126) of logical positions (128) is defined on the transport plane (122), wherein the transport modules (124) are separated constructional units and/or subunits of the transport plane (122) comprising at least one logical position (128),
- a drive system (130) configured for moving the carriers (112) on the transport plane (122) between the logical positions (128),
- a control system (136) configured for controlling the drive system (130), wherein the control system (136) comprises a routing system (138) configured for calculating routes for the carriers (112), wherein the routes comprise a set of partial routes from a start position to a final destination position which is calculated, planned or assigned to a carrier (112), wherein the route is divided into one or more partial routes to intermediate destinations,
wherein the method comprises the steps:
a) defining a global pattern of safe points (148) and applying the global pattern on the transport plane (122) by using the routing system (138), wherein safe points (148) are logical positions (128) selected in view of a range of motion for a carrier (112) occupying said logical position (128) such that on the safe points (148) a carrier (112) can be placed and can be moved away again, wherein the global pattern is applied onto the transport plane (122) independently of module boundaries, wherein a different number of safe points is used for each transport module (124);
b) calculating the partial routes for the carriers (112) so that an end position of each partial route is either one of the safe points (148) or has a free path to one of the safe points (148) to be reachable in the next partial route by using the routing system (138).

2. The method according to the preceding claim, wherein the global pattern is a repetitive pattern.

3. The method according to any one of the preceding claims, wherein at least one of the transport modules (124) is a non-square transport module and/or the transport modules (124) have different sizes.

4. The method according to any one of the preceding claims, wherein applying of the global pattern onto the transport plane (122) comprises positioning the global pattern onto the transport plane (122), wherein positioning the global pattern comprises defining an origin of the global pattern on a logical position (128) of the transport plane (122).

5. The method according to any one of the preceding claims, wherein applying of the global pattern onto the transport plane (122) comprises determining a best fit of the global pattern onto the grid (126) of logical positions (128), wherein the determining of the best fit of the global pattern onto the grid (126) of logical positions (128) is performed considering hardware conditions and/or performance of the distribution system (110).

6. The method according to any one of the preceding claims, wherein applying of the global pattern onto the transport plane (122) comprises locally adapting the global pattern to the transport plane (122).

7. The method according to the preceding claim, wherein the adapting comprises changing at one or more safe points (148) into transport positions (154), wherein safe points (148) at an input location or an output location of the transport plane (122) and/or at a crossing position and/or in case of a narrow transport plane (122) are changed into transport positions (154).

8. The method according to any one of the preceding claims, wherein the applying of the global pattern onto the transport plane (122) comprises automated adapting the global pattern.

9. The method according to any one of the preceding claims, wherein defining of the global pattern comprises selecting a predefined global pattern out of one or more global patterns.

10. The method according to any one of the preceding claims, wherein the defining of the global pattern comprises optimizing per logical position (128) whether it should be a safe point (148) or a transport position (154).

11. The method according to the preceding claim, wherein the transport plane (122) is split into multiple domains onto each of which a separate global pattern is applied.

12. The method according to anyone of the preceding method claims, wherein the method is computer-implemented.

13. The method according to any one of the preceding method claims, wherein the method comprises analyzing traffic load in at least one area of the transport plane (122) using computer algorithms, wherein the method comprises determining at least one optimized pattern, wherein the method comprises proposing the optimized pattern and/or automatically changing the global pattern for the optimized one for that area.

14. The method according to any one of the preceding method claims, wherein the method comprises re-applying at least one of the global patterns and/or making local changes to some of the pattern positions.

15. A distribution system (110) comprising
- a number of carriers (112) configured for carrying one or more objects (114),
- a transport plane (122) configured for supporting the carriers (112), wherein the transport plane (122) comprises a plurality of transport modules (124), wherein a grid (126) of logical positions (128) is defined on the transport plane (122), wherein the transport modules (124) are separated constructional units and/or subunits of the transport plane (122) comprising at least one logical position (128),
- a drive system (130) configured for moving the carriers (112) on the transport plane (122) between the logical positions (128),
- a control system (136) configured for controlling the drive system (130), wherein the control system (136) comprises a routing system (138) configured for calculating routes for the carriers (112), wherein the routes comprise a set of partial routes from a start position to a final destination position which is calculated, planned or assigned to a carrier (112), wherein the route is divided into one or more partial routes to intermediate destinations, wherein the control system (136) is configured for performing a method of operating a distribution system (110) according to any one of the claims 1 to 14.

## Patentansprüche

1. Verfahren zum Betreiben eines Verteilungssystems (110), wobei das Verteilungssystem (110) Folgendes umfasst:
- eine Anzahl von Trägern (112), die zum Tragen eines oder mehrerer Objekte (114) konfiguriert sind,
- eine Transportebene (122), die zum Halten der Träger (112) konfiguriert ist, wobei die Transportebene (122) eine Vielzahl von Transportmodulen (124) umfasst, wobei ein Raster (126) von logischen Positionen (128) auf der Transportebene (122) definiert ist, wobei die Transportmodule (124) getrennte Baueinheiten und/oder Untereinheiten der Transportebene (122) sind, die mindestens eine logische Position (128) umfassen,
- ein Antriebssystem (130), das zum Bewegen der Träger (112) auf der Transportebene (122) zwischen den logischen Positionen (128) konfiguriert ist,
- ein Steuersystem (136), das zum Steuern des Antriebssystems (130) konfiguriert ist, wobei das Steuersystem (136) ein Routing-System (138) umfasst, das zum Berechnen von Routen für die Träger (112) konfiguriert ist, wobei die Routen einen Satz von Teilrouten von einer Startposition zu einer Endzielposition umfassen, die berechnet, geplant oder einem Träger (112) zugewiesen wird, wobei die Route in eine oder mehrere Teilrouten zu Zwischenzielen unterteilt ist,
wobei das Verfahren die folgenden Schritte umfasst:
a) Definieren eines globalen Musters von sicheren Punkten (148) und Anwenden des globalen Musters auf die Transportebene (122) unter Verwendung des Routing-Systems (138), wobei sichere Punkte (148) logische Positionen (128) sind, die im Hinblick auf einen Bewegungsbereich für einen Träger (112) ausgewählt werden, der die logische Position (128) belegt, sodass auf den sicheren Punkten (148) ein Träger (112) platziert und wieder wegbewegt werden kann, wobei das globale Muster unabhängig von Modulgrenzen auf die Transportebene (122) angewendet wird, wobei eine unterschiedliche Anzahl von sicheren Punkten für jedes Transportmodul (124) verwendet wird;
b) Berechnen der Teilrouten für die Träger (112), sodass eine Endposition jeder Teilroute entweder einer der sicheren Punkte (148) ist oder einen freien Weg zu einem der sicheren Punkte (148) aufweist, die in der nächsten Teilroute unter Verwendung des Routing-Systems (138) erreichbar sind.

2. Verfahren nach dem vorhergehenden Anspruch, wobei das globale Muster ein sich wiederholendes Muster ist.

3. Verfahren nach einem der vorhergehenden Ansprüche, wobei mindestens eines der Transportmodule (124) ein nicht quadratisches Transportmodul ist und/oder die Transportmodule (124) unterschiedliche Größen aufweisen.

4. Verfahren nach einem der vorhergehenden Ansprüche, wobei das Anwenden des globalen Musters auf die Transportebene (122) das Positionieren des globalen Musters auf der Transportebene (122) umfasst, wobei das Positionieren des globalen Musters das Definieren eines Ursprungs des globalen Musters auf einer logischen Position (128) der Transportebene (122) umfasst.

5. Verfahren nach einem der vorhergehenden Ansprüche, wobei das Anwenden des globalen Musters auf die Transportebene (122) das Bestimmen einer besten Anpassung des globalen Musters auf das Raster (126) von logischen Positionen (128) umfasst, wobei das Bestimmen der besten Anpassung des globalen Musters auf das Raster (126) von logischen Positionen (128) unter Berücksichtigung der Hardwarebedingungen und/oder Leistung des Verteilungssystems (110) durchgeführt wird.

6. Verfahren nach einem der vorhergehenden Ansprüche, wobei das Anwenden des globalen Musters auf die Transportebene (122) das lokale Adaptieren des globalen Musters an die Transportebene (122) umfasst.

7. Verfahren nach dem vorhergehenden Anspruch, wobei das Adaptieren das Wechseln eines oder mehrerer sicherer Punkte (148) in Transportpositionen (154) umfasst, wobei sichere Punkte (148) an einem Eingangsort oder einem Ausgangsort der Transportebene (122) und/oder an einer Kreuzungsposition und/oder im Fall einer schmalen Transportebene (122) in Transportpositionen (154) gewechselt werden.

8. Verfahren nach einem der vorhergehenden Ansprüche, wobei das Anwenden des globalen Musters auf die Transportebene (122) das automatisierte Adaptieren des globalen Musters umfasst.

9. Verfahren nach einem der vorhergehenden Ansprüche, wobei das Definieren des globalen Musters das Auswählen eines vordefinierten globalen Musters aus einem oder mehreren globalen Mustern umfasst.

10. Verfahren nach einem der vorhergehenden Ansprüche, wobei das Definieren des globalen Musters das Optimieren pro logischer Position (128) umfasst, ob es sich um einen sicheren Punkt (148) oder eine Transportposition (154) handeln sollte.

11. Verfahren nach dem vorhergehenden Anspruch, wobei die Transportebene (122) in mehrere Domänen aufgeteilt ist, auf die jeweils ein separates globales Muster angewendet wird.

12. Verfahren nach einem der vorhergehenden Verfahrensansprüche, wobei das Verfahren computerimplementiert ist.

13. Verfahren nach einem der vorhergehenden Verfahrensansprüche, wobei das Verfahren das Analysieren der Verkehrslast in mindestens einem Bereich der Transportebene (122) unter Verwendung von Computeralgorithmen umfasst, wobei das Verfahren das Bestimmen mindestens eines optimierten Musters umfasst, wobei das Verfahren das Vorschlagen des optimierten Musters und/oder das automatische Ändern des globalen Musters für das optimierte Muster für diesen Bereich umfasst.

14. Verfahren nach einem der vorhergehenden Verfahrensansprüche, wobei das Verfahren das erneute Anwenden mindestens eines der globalen Muster und/oder das Vornehmen lokaler Änderungen an einigen der Musterpositionen umfasst.

15. Verteilungssystem (110), umfassend
- eine Anzahl von Trägern (112), die zum Tragen eines oder mehrerer Objekte (114) konfiguriert sind,
- eine Transportebene (122), die zum Halten der Träger (112) konfiguriert ist, wobei die Transportebene (122) eine Vielzahl von Transportmodulen (124) umfasst, wobei ein Raster (126) von logischen Positionen (128) auf der Transportebene (122) definiert ist, wobei die Transportmodule (124) getrennte Baueinheiten und/oder Untereinheiten der Transportebene (122) sind, die mindestens eine logische Position (128) umfassen,
- ein Antriebssystem (130), das zum Bewegen der Träger (112) auf der Transportebene (122) zwischen den logischen Positionen (128) konfiguriert ist,
- ein Steuersystem (136), das zum Steuern des Antriebssystems (130) konfiguriert ist, wobei das Steuersystem (136) ein Routing-System (138) umfasst, das zum Berechnen von Routen für die Träger (112) konfiguriert ist, wobei die Routen einen Satz von Teilrouten von einer Startposition zu einer Endzielposition umfassen, die berechnet, geplant oder einem Träger (112) zugewiesen wird, wobei die Route in eine oder mehrere Teilrouten zu Zwischenzielen unterteilt ist, wobei das Steuersystem (136) zum Durchführen eines Verfahrens zum Betreiben eines Verteilungssystems (110) nach einem der Ansprüche 1 bis 14 konfiguriert ist.

## Revendications

1. Procédé de fonctionnement d'un système de distribution (110), dans lequel le système de distribution (110) comprend
- un nombre de supports (112) configurés pour porter un ou plusieurs objets (114),
- un plan de transport (122) configuré pour supporter les supports (112), le plan de transport (122) comprenant une pluralité de modules de transport (124), une grille (126) de positions logiques (128) étant définie sur le plan de transport (122), les modules de transport (124) étant des unités et/ou des sous-unités de construction séparées du plan de transport (122) comprenant au moins une position logique (128),
- un système d'entraînement (130) configuré pour déplacer les supports (112) sur le plan de transport (122) entre les positions logiques (128),
- un système de commande (136) configuré pour commander le système d'entraînement (130), le système de commande (136) comprenant un système d'acheminement (138) configuré pour calculer des itinéraires pour les supports (112), les itinéraires comprenant un ensemble d'itinéraires partiels d'une position de départ à une position de destination finale qui est calculée, planifiée ou attribuée à un support (112), l'itinéraire étant divisé en un ou plusieurs itinéraires partiels vers des destinations intermédiaires,
dans lequel le procédé comprend les étapes :
a) définition d'un motif global de points de sécurité (148) et application du motif global sur le plan de transport (122) en utilisant le système d'acheminement (138), les points de sécurité (148) étant des positions logiques (128) choisies au regard d'une plage de mouvement pour un support (112) occupant ladite position logique (128) de telle sorte que sur les points de sécurité (148) un support (112) peut être placé et peut être éloigné à nouveau, le motif global étant appliqué sur le plan de transport (122) indépendamment des limites du module, un nombre différent de points de sécurité étant utilisé pour chaque module de transport (124) ;
b) calcul des itinéraires partiels pour les supports (112) de sorte qu'une position finale de chaque itinéraire partiel est l'un des points de sécurité (148) ou a un trajet libre vers l'un des points de sécurité (148) qui peuvent être atteints dans l'itinéraire partiel suivant en utilisant le système d'acheminement (138).

2. Procédé selon la revendication précédente, dans lequel le motif global est un motif répétitif.

3. Procédé selon l'une quelconque des revendications précédentes, dans lequel au moins l'un des modules de transport (124) est un module de transport non carré et/ou les modules de transport (124) ont des tailles différentes.

4. Procédé selon l'une quelconque des revendications précédentes, dans lequel l'application du motif global sur le plan de transport (122) comprend le positionnement du motif global sur le plan de transport (122), dans lequel le positionnement du motif global comprend la définition d'une origine du motif global sur une position logique (128) du plan de transport (122).

5. Procédé selon l'une quelconque des revendications précédentes, dans lequel l'application du motif global sur le plan de transport (122) comprend la détermination d'un meilleur ajustement du motif global sur la grille (126) de positions logiques (128), dans lequel la détermination du meilleur ajustement du motif global sur la grille (126) de positions logiques (128) est réalisée en prenant en compte les conditions matérielles et/ou les performances du système de distribution (110).

6. Procédé selon l'une quelconque des revendications précédentes, dans lequel l'application du motif global sur le plan de transport (122) comprend l'adaptation locale du motif global au plan de transport (122).

7. Procédé selon la revendication précédente, dans lequel l'adaptation comprend le changement au niveau d'un ou de plusieurs points de sécurité (148) en positions de transport (154), dans lequel les points de sécurité (148) au niveau d'un emplacement d'entrée ou d'un emplacement de sortie du plan de transport (122) et/ou au niveau d'une position de croisement et/ou dans le cas d'un plan de transport (122) étroit sont changés en positions de transport (154).

8. Procédé selon l'une quelconque des revendications précédentes, dans lequel l'application du motif global sur le plan de transport (122) comprend l'adaptation automatisée du motif global.

9. Procédé selon l'une quelconque des revendications précédentes, dans lequel la définition du motif global comprend la sélection d'un motif global prédéfini parmi un ou plusieurs motifs globaux.

10. Procédé selon l'une quelconque des revendications précédentes, dans lequel la définition du motif global comprend l'optimisation par position logique (128) afin de déterminer si celle-ci doit être un point de sécurité (148) ou une position de transport (154).

11. Procédé selon la revendication précédente, dans lequel le plan de transport (122) est divisé en de multiples domaines sur chacun desquels un motif global séparé est appliqué.

12. Procédé selon l'une quelconque des revendications de procédé précédentes, dans lequel le procédé est mis en œuvre par ordinateur.

13. Procédé selon l'une quelconque des revendications de procédé précédentes, dans lequel le procédé comprend l'analyse de la charge de trafic dans au moins une zone du plan de transport (122) en utilisant des algorithmes informatiques, dans lequel le procédé comprend la détermination d'au moins un motif optimisé, dans lequel le procédé comprend la proposition du motif optimisé et/ou le changement automatique du motif global par le motif optimisé pour cette zone.

14. Procédé selon l'une quelconque des revendications de procédé précédentes, dans lequel le procédé comprend la ré-application d'au moins un des motifs globaux et/ou la réalisation de changements locaux sur certaines des positions de motif.

15. Système de distribution (110) comprenant
- un nombre de supports (112) configurés pour porter un ou plusieurs objets (114),
- un plan de transport (122) configuré pour supporter les supports (112), le plan de transport (122) comprenant une pluralité de modules de transport (124), une grille (126) de positions logiques (128) étant définie sur le plan de transport (122), les modules de transport (124) étant des unités et/ou des sous-unités de construction séparées du plan de transport (122) comprenant au moins une position logique (128),
- un système d'entraînement (130) configuré pour déplacer les supports (112) sur le plan de transport (122) entre les positions logiques (128),
- un système de commande (136) configuré pour commander le système d'entraînement (130), le système de commande (136) comprenant un système d'acheminement (138) configuré pour calculer des itinéraires pour les supports (112), les itinéraires comprenant un ensemble d'itinéraires partiels d'une position de départ à une position de destination finale qui est calculée, planifiée ou attribuée à un support (112), l'itinéraire étant divisé en un ou plusieurs itinéraires partiels vers des destinations intermédiaires, le système de commande (136) étant configuré pour réaliser un procédé de fonctionnement d'un système de distribution (110) selon l'une quelconque des revendications 1 à 14.
